# EUROPEAN PATENT SPECIFICATION

(11) **EP 0 694 803 B1**
(45) Date of publication and mention of the grant of the patent: **04.12.2002**
(21) Application number: 95111628.4
(22) Date of filing: 24.07.1995
(51) Int. Cl.: G02B 27/02, G03B 21/00, G09F 9/00, G03B 21/132

(54) **Manuscript display apparatus**
Manuskriptanzeigevorrichtung
Dispositif d'affichage d'un manuscrit

(30) Priority: 25.07.1994 JP 19222994; 27.01.1995 JP 3167095
(43) Date of publication of application: 31.01.1996
(73) Proprietor: MURAKAMI KAIMEIDO CO., LTD, Shizuoka-Ken, 422 (JP)
(72) Inventor: Kobayashi, Akiyoshi, Shimada-shi, Shizuoka-ken 427 (JP); Yamana, Toru, Fujieda-shi, Shizuoka-ken 426-01 (JP); Nakazawa, Yoshitake, Shimizu-shi, Shizuoka-ken 424 (JP); Yamamoto, Shinichi, Fujieda-shi, Shizuoka-ken 426 (JP); Sato, Hidenori, Fujieda-shi, Shizuoka-ken 426 (JP)
(74) Representative: Riederer Freiherr von Paar zu Schönau, Anton

(56) References cited:
- DE-A- 3 411 410
- GB-A- 2 186 385
- US-A- 4 036 459
- US-A- 4 267 489
- US-A- 4 942 411
- PATENT ABSTRACTS OF JAPAN vol. 014, no. 079 (E-0888), 14 February 1990 & JP 01 292972 A (ASAHI GLASS CO LTD), 27 November 1989,
- PATENT ABSTRACTS OF JAPAN vol. 017, no. 224 (P-1530), 10 May 1993 & JP 04 355743 A (SANYO ELECTRIC CO LTD), 9 December 1992,

## Description

### BACKGROUND OF THE INVENTION

### Field of the Invention

The present invention relates to a manuscript display apparatus, and in particular relates to a manuscript display apparatus that allows a speaker who is presenting a lecture or speech to view a manuscript without lowering his/her line of sight onto a manuscript sheet on which the manuscript is written, and at the same time to have an indication of the instant time or of the time left.

### Description of the Prior Art

Usually, when a speaker who is presenting speeches or lectures gives his/her talks while reading previously prepared manuscripts, prompters are usually used. These prompters are constructed from an input device for inputting manuscript data, an image signal generating device for generating image signals based on the input data and outputting such image signals, an image display device for displaying an image of the manuscript on its screen based upon the image signals, and a half mirror for reflecting light emitted from the screen of the image display device. The input device is usually a keyboard and a floppy disk drive, and the image signal generating device is usually a personal computer or a wordprocessor. The manuscript data inputted from the input device is processed in the image signal generating device to produce image signals which are then transmitted to the image display device where a text is displayed on its screen in reversed form. The light emitted from this reversed image is reflected on a half mirror toward the eyes of the speaker. Accordingly, the speaker is able to view the manuscript without having to lower his/her line of sight to the speaker's podium. Further, the speaker is able to see the audience through the half mirror, while the audience is also able to see the speaker through the half mirror. However, the prompter needs the image signal generating device which outputs image signals to the image display device.

From DE 3411410 A, a manuscript display apparatus is known which allows to directly view also a handwritten or printed manuscript. This display apparatus comprises: manuscript sheet supporting means adapted for supporting thereon a manuscript sheet in which a manuscript to be displayed is written; light generating means adapted for generating light passing through the manuscript sheet which is supported on said manuscript sheet supporting means; a half mirror arranged for reflecting the light which is generated by said light generating means and then passes through the manuscript sheet, the half mirror having a corner portion; and support means supporting said half mirror, said support means having an upper end portion whereon the half mirror is pivotally supported. The half mirror is arranged at a position in the apparatus where a speaker who uses the manuscript display apparatus is capable of seeing the audience through the half mirror and the audience is also capable of seeing the speaker therethrough. The known apparatus allows an exchange of the half mirror for viewing the manuscript with an overhead-projector full mirror reflecting in the opposite direction a projected picture, by rotating the mirror installation by 180° about a vertical axis. The half mirror itself can also be angularly adjusted, by rotating it about a horizontal axis. However, besides this, there are no more possibilities for adjusting the apparatus to any preferences of the speaker or to the characteristics of the manuscript sheet.

Similarly, from GB 2186385 A, a prompting apparatus is known allowing the speaker via a reflecting glass plate to view cards on which he wrote short notes and key words. The glass plate is rotatable about a horizontal axis.

For projection apparatuses, adjusting the reading orientation is known per se from US 4036459 A. In this prior art, a support means adapted to support the projection apparatus includes a blockable ball joint. This support means allows a rotation of the support about a vertical axis and the projection apparatus is shown to be rotatable about a transversal horizontal axis, but a rotation about the forward horizontal axis, allowing to select between an upright or a broadside orientation of the image, is not provided for.

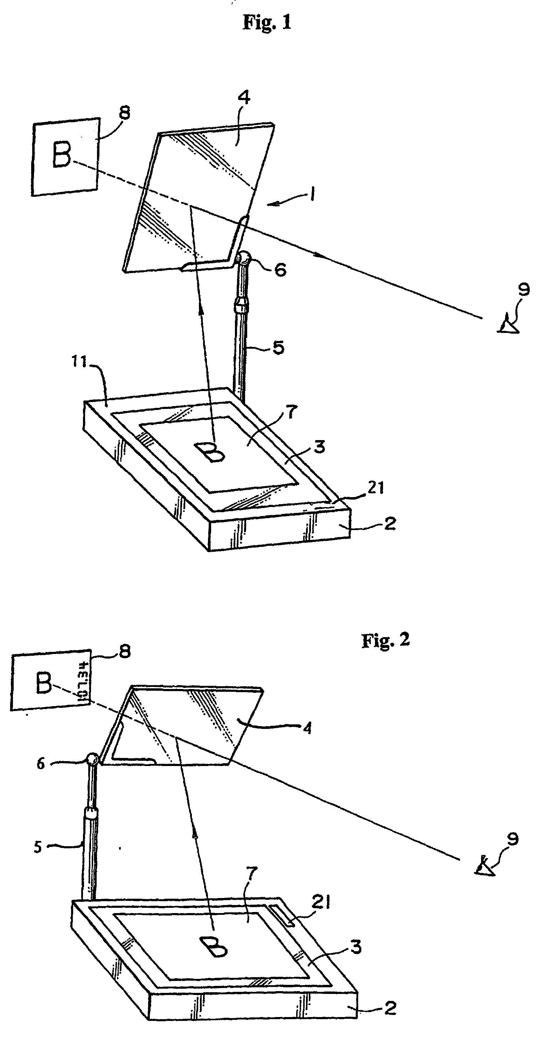

From JP 01 292972 A (Patent Abstracts of Japan, Vol. 014, No. 079 - E 0888, 14-02-90), a time display portion is known which converts an image on a half mirror to a normal image by synthesizing an information from a clock circuit, which is another image signal, at the circuit to a driver of a plane display element, then reversing right-left at a drive circuit (see Fig. 1). The time display image on the half mirror can not be adapted to different orientations of the device, i.e. whether the manuscript display apparatus is positioned lengthwise or crosswise.

It is further known, i.e. from JP 04 355743 A (Patent Abstracts of Japan, Vol. 017, No. 224- P 1530, 10-05-93), to use in an overhead projector a pointer marker which is operated to be lighted up or lighted out by the switch operation of a mouse button so as to move the pointer marker according to the movement of the mouse.

### SUMMARY OF THE INVENTION

The present invention has been made in view of the problems which are involved with the manuscript display apparatuses described above. Accordingly, it is an object of the present invention to provide a manuscript display apparatus, including a time display, which apparatus is adaptable to the individual desires and requirements of the speaker and to his manuscripts.

In order to achieve the above described object, the manuscript display apparatus according to the present invention is designed as defined in claim 1. Thus, the manuscript display apparatus can be used both in longitudinal and in crosswise direction to comply with the user's requirements, for example, the preference of the speaker and the size of the manuscript sheet, since the half mirror of the apparatus is supported rotatably in all directions, so that the speaker is enabled to read the manuscript sheet easily independently of whether it is positioned lengthwise or crosswise, and can permanently observe the time by a time information integrated into the displayed picture. Since the display apparatus comprises a rotatable time display means controlled by a clock, it is possible to display the time display image as a virtual image in said half mirror selectively in either the widthwise or the lengthwise direction of said half mirror. In this respect, it is preferred that said time display means includes a number display element and mirror for reversing the time display image displayed in said time display means, or a bar graph display element.

In the manuscript display apparatus of the present invention, it is possible to provide a marker display means for displaying a marker image which indicates a desired position on the manuscript, whereby the marker image is displayed in the half mirror as a virtual image together with the image of the manuscript. The marker can be put into the virtual image viewed by the speaker. Preferably, the marker display means includes: a plurality of marker lights such as LEDs arranged at regular intervals, a switch for lighting up the marker lights, and a marker control means for controlling the lighting up of the marker lights, in which the operation of the switch causes the marker lights to be lit up sequentially. Alternatively, the marker display means may be formed from a plurality of marker lights such as LED arranged at regular intervals and a control means which sequentially lights up each marker light after a prescribed time interval has elapsed. By providing such a marker display means, the position of the virtual image of the prescribed lit-up light such as LED allows the speaker to easily find the beginning of the next line of the manuscript to be read, and thereby makes it possible for the speaker to deliver a smooth presentation. Also for such marker, it is possible to arrange facilities for both main orientations.

A useful design for the apparatus is characterized in that it further comprises a main body which includes said manuscript sheet supporting means and said light generating means and which has a side surface; and in that said support means includes a support portion having at least two support members and at least one joint which allows said support portion to be expandable and contractable, and a lower end portion which is attached to said main body pivotally along an plane which is parallel to the side surface of said main body. Preferably, the support portion is pivotally supported with respect to the main body by means of a support portion holding portion and a bolt. Therefore, since the support portion is foldable with respect to the main body of the apparatus and further it can be accommodated within a space formed in the main body, it is possible to make the entire size of the apparatus compact. This design further provides for a simple manuscript sheet support and also for an easy vertical adjustment of the half mirror. Such bodies like the main body are known per se e.g. from US 4267489 A which shows a respective display box which contains reflection means and plates. Thus, the design of such body is not a problem to the practitioner. In this context, the manuscript sheet supporting means is preferably formed from a light permeable plate which permits the light generated by the light generating means to pass therethrough, and more preferably the manuscript sheet supporting means is formed from a diffusion plate or a diffusion film which diffuses the light passing therethrough, while the light generating means includes a light source arranged underneath the manuscript sheet supporting means and preferably is formed from a plurality of light emitting bodies. It may further include reflection means for reflecting and diffusing the light emitted from the light emitting bodies. In this case, it is preferred that the reflection means includes a first portion which is relatively close to the manuscript sheet supporting means and a second portion which is relatively far from the manuscript sheet supporting means, in which the first portion has a lower reflectance than the second portion.

In the manuscript display apparatus of the present invention, it is possible to include manuscript sheet feeding means for supplying a manuscript sheet to the manuscript sheet supporting means. Manuscript feeding means are known per se, e.g. for an overhead projector from US 4942411 A or for a stack of cards from the GB 2186385 A mentioned above. Also, DE 3411410 A mentions a manuscript sheet transport. The manuscript sheet feeding means can be formed from a feeding unit which feeds the manuscript sheet onto the manuscript sheet supporting means and a winding unit for winding up the manuscript sheet which had been fed to the manuscript sheet supporting means, and which possibly includes a manuscript sheet fixing film adapted for holding the manuscript sheets thereon.

### BRIEF DESCRIPTION OF THE DRAWINGS

Fig.s 1 and 2 are illustrations showing a manuscript display apparatus with manuscript and time viewing possibilities, according to a technique the invention starts out from;
Fig. 3 is an exploded view of the overall construction of one embodiment of a manuscript display apparatus according to the present invention;
Fig. 4 is a diagram illustrating the principle of displaying the time;
Fig. 5 is a perspective view of a time display section;
Fig. 6 is a perspective view showing the provision of a rotatable type time display unit which is mounted in a mounting hole;
Fig. 7 is an explanatory drawing which shows the condition that the time is displayed using a bar graph time display;
Fig. 8 is a block diagram of a manual type marker portion;
Fig. 9 is a block diagram of an automatic type marker portion.

### DETAILED DESCRIPTION OF THE PREFERRED EMBODIMENTS

With reference to the appended drawings, a detailed description of preferred embodiments of a manuscript display apparatus according to the present invention will now be given. Therein, it should be noted that the term "manuscript" as used in this application refers to any collection of numbers, characters, drawings or pictures written, printed or arranged on a medium such as paper, plastic sheets or the like. Hereinafter, such a medium on which the manuscript is written or described is referred to as "manuscript sheet".

At first, in Fig. 1, the principle of a manuscript display apparatus is explained which is the starting point of the present invention. As shown in this illustration, a manuscript display apparatus 1 includes a box-shaped main body 2 having a light emitting body (not shown in Fig. 1) housed therein, a diffusion plate 3 through which light emitted from the light emitting body is transmitted, the diffusion plate 3 being arranged on top of the main body 2 to diffuse the light, and for supporting a half-mirror 4 a support body 5 having one end supported by the main body 2 and the other end provided with a support portion 6 which is a ball joint, the half mirror 4 being supported by the support portion 6 and held at a height that roughly corresponds to the eye 9 level of a speaker. The main body 2 includes a main body cover 11. When the manuscript display apparatus is to be used, a manuscript sheet 7 which is formed from a normal paper is placed on top of the diffusion plate 3 in such a manner that the surface of the sheet on which the manuscript is written (hereinafter, referred to as a "front side") faces toward the diffusion plate 3, and the top of the page is positioned closest to the speaker. In this state, it is virtually impossible to make out the contents of the manuscript from the back side of the manuscript sheet 7 (hereinafter, referred to as a "back side").

When light is emitted from the light emitting body inside the main body 2, the emitted light becomes diffused by the diffusion plate 3 and uniformly illuminates the manuscript sheet 7 from the front side thereof. This diffused light transmitted by the diffusion plate 3 causes the characters of the manuscript written on the manuscript sheet 7 to appear as mirror image characters when viewed from the backside of the manuscript sheet 7. High quality and medium quality papers and anyhow most of the papers which are usually used as papers on which a manuscript is written can be used as a manuscript sheet for use in this apparatus, since these papers can clearly project the manuscript on the back side of the manuscript sheet 7. Furthermore, it is of course possible to use transparent papers and tracing papers which have excellent light transmission characteristics. In the case where a mirror image text which is prepared by using a personal computer or a copy machine and tracing paper or the like is used as the manuscript sheet, such a mirror image text is placed on the diffusion plate 3 so that the front side thereof on which the reversed manuscript is present faces up.

As for the light that passes through the manuscript sheet 7, one part of such light is reflected on the half mirror 4 and is displayed as a virtual image 8. The virtual image 8 is a mirror image of the image which has been reflected on the half mirror 4, it is an erected image and therefore the manuscript of the manuscript sheet 7 is displayed in its original form. Therefore, by using such manuscript display apparatus, it is possible for the speaker to read the manuscript through the virtual image 8 without having to lower his/her line of sight to the podium, and thus enables the speaker to continue speaking while maintaining a line of sight toward the audience.

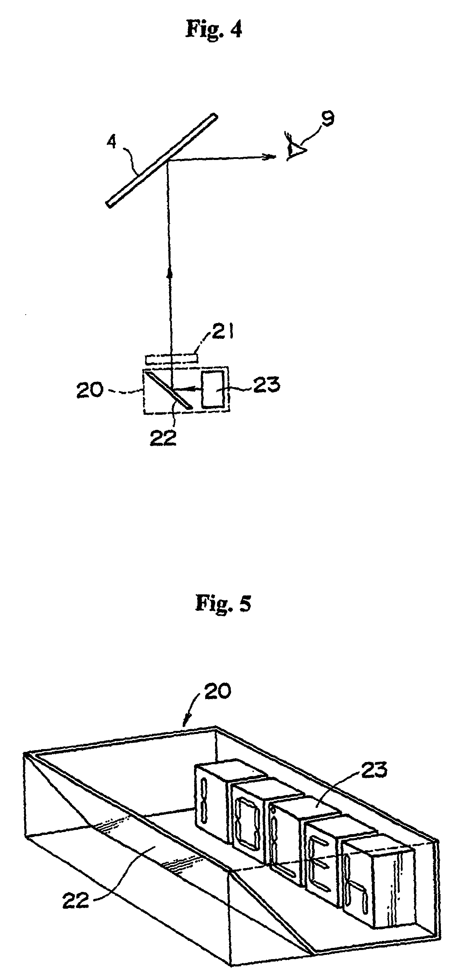

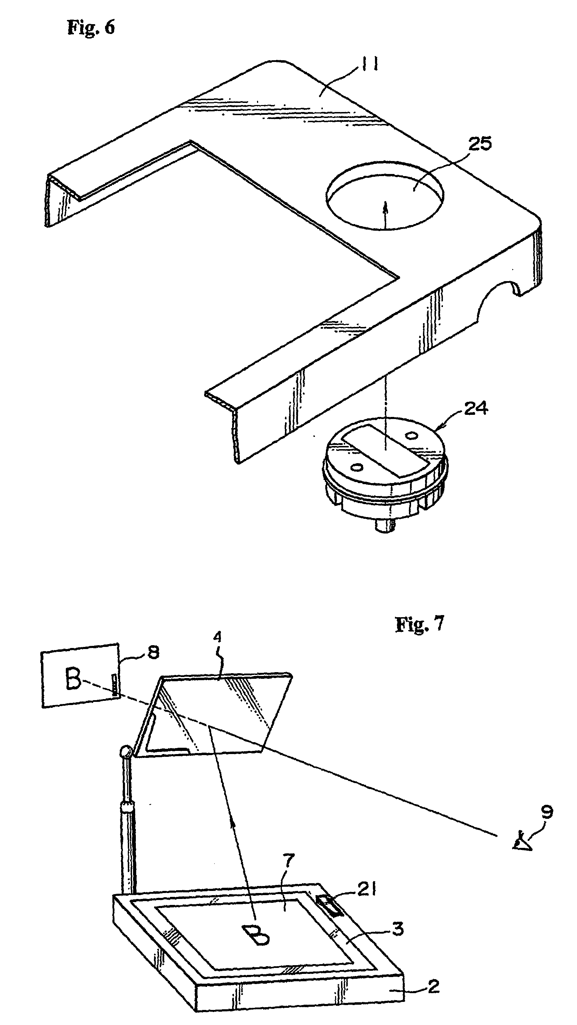

The apparatus further has a clock and a time display under a transparent display cover 21 enabling the speaker to watch the time during his speech. Fig. 4 is a diagram illustrating the principle of such displaying the time, and Fig. 5 is a perspective view of a time display portion 20. As shown in Fig. 5, housed in the inside of the time display portion 20 are a mirror 22 and an inverted number display element 23, the mirror 22 facing a number display element 23. Formed in the top of the time display portion 20 is an opening which is covered by the transparent time display cover 21 provided in the main body cover 11. In this way, a time display image displayed by the number display element 23 is reflected by the mirror 22 to form a reversed mirror image. Then, after this mirror image is reflected by the half mirror 4, it is reversed once more to form an erected virtual image of the time display. Accordingly, a speaker is able to view a proper erected image of the time display without the need for a special number display element which displays time as a mirror image of itself.

The support portion 6 being a ball joint, it is possible to use the manuscript display apparatus upright or broadside, depending on the orientation of the lines on the manuscript The broadside orientation is shown in Fig. 2, where the manuscript display apparatus is positioned sideways for use, with the consequence that the virtual image 8 of the above-described time display appears along in the vertical direction.

The invention is to overcome this problem by a design shown in detail in Fig. 6. Herein, the number display element 23 and the mirror 22 are housed inside a circular shaped rotatable unit 24 which is rotatable within a circular-shaped mounting opening 25 formed in the main body cover. Thereby, it is possible to adjust the time display image to appear in any appropriate direction, whether the manuscript display apparatus is positioned lengthwise for use, as shown in Fig. 1, or sideways for use, as shown in Fig. 2.

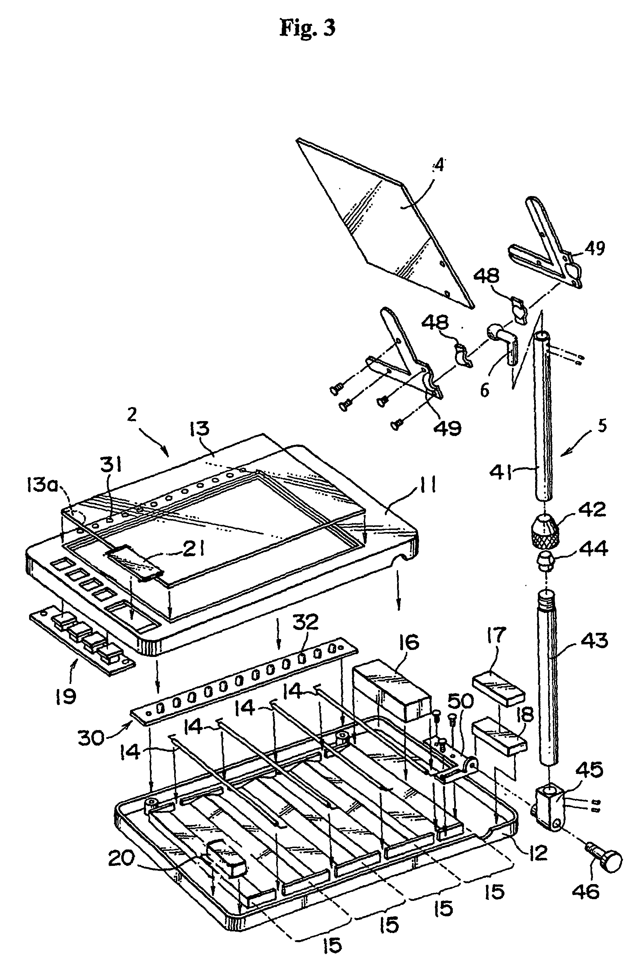

In the following, the overall structure of the manuscript display apparatus is described. Fig. 3 is an exploded view of the overall construction of the described embodiment. The manuscript display apparatus includes the main body 2 provided with a light emitting portion, the support body 5 supported by the main body 2, and the half mirror 4 supported by the support body 5 via the ball joint 6.

The main body 2 includes the main body cover 11 and a main body bottom portion 12. Provided on top of the main body cover 11 is a diffusion plate 13. In the central portion of the inner portion of the main body bottom portion 12, four light emitting bodies 14 are provided so as to run parallel with each other. Further, for reflecting the light emitted from the light emitting bodies 14, reflecting portions 15 are provided on the main body bottom portion 12 in such a way that each of the reflecting portions 15 is positioned underneath the corresponding respective light emitting body 14. Further, the main body bottom portion 12 is provided with a power supply 16, a control section 17, an inverter 18, the time display portion 20, a marker portion 30 consisting of a plurality of LED 32 arranged along the lines, and a fixing plate 50. Further, on the top of the main body cover 11, there are formed switches 19 and the cover 21 of the time display, and a plurality of marker display windows 31 lying along a straight line.

Any light emitting means which is capable of uniformly illuminating the entire range of the diffusion plate 13 may be used for the light emitting bodies 14, and examples of the preferred light emitting means include cold-cathode discharge tubes, hot-cathode discharge tubes and electroluminescent lights and the like. In this connection, it is preferred that the light emitting bodies 14 be elements that generate only a small amount of heat. The reason for this is that if a large amount of heat is generated, it causes the manuscript sheet placed on top of the diffusion plate 13 to become hot and dry, thus leading to a rolling or warping of the sheet.

The support portion 5 includes an upper support member 41 which by means of a joint 42 is connected to a lower support member 43. A clamping collar 44 allows the upper support member 41 to be expandable with respect to the lower support member 43.

On the lower end of the lower support member 43, there is provided a support portion holding member 45 which is fixed to the lower end portion of the lower support member 43 through screws. The support portion holding member 45 has a cylindrical portion integrally formed on one lateral side thereof, and an axial bore is formed through the cylindrical portion so as to pass through a bottom portion of the support portion holding member 45. A bolt 46 having a screw at a tip end thereof is inserted into the axial bore from the opposite lateral side of the support portion holding member 45.

On the top end of the upper support member 41, there are provided the ball joint 6 which has one end formed into a ball portion and the other end fastened to the top end of the upper support member 41, two collars 48 having matching portions for mating with the ball portion of the ball joint, and a pair of half mirror support plates 49 having socket portions adapted to mate with the matching portions of the collars 48. The half mirror support plates 49 thus constructed are coupled to the ball joint 6 via the collars 48 at the socket portions thereof.

Further, within the main body bottom portion 12, there is provided the fixing plate 50 which is fastened to the main body bottom portion 12. The fixing plate 50 has a bolt receiving hole to which the tip portion of the bolt 46 is adapted to be screwed. Further, at the corresponding side portions of the main body bottom portion 12 and the main body cover 11, there are formed semi-circular notches which form a circular hole when the main body bottom portion 12 and the main body cover 11 are assembled together. The circular hole has size and shape that can receive the cylindrical portion of the support portion holding member 45. Further, the bolt receiving hole of the fixing plate 50 is positioned so as to be aligned with the circular hole.

Therefore, by inserting the cylindrical portion of the support portion holding member 45 into the circular hole of the main body 2, and then inserting the bolt 46 into the axial bore of the support portion holding member 45 and fastening it in the bolt receiving hole of the fixing plate 50, it is possible for the support portion holding member 45 to be pivotally supported with respect to the main body 2.

By operating the switch 19, it is possible to change the display mode of the time display portion 20 into any one of the display modes including (1) normal time display mode, (2) stopwatch mode, and (3) remaining time display mode. This makes it possible for the speaker to choose a desired time display mode and then observe the chosen display in the half mirror. Accordingly, the speaker does not need to move his/her line of sight in order to view the time display, and this enables the speaker to easily pace himself/herself when giving a presentation. In the above construction, a clock is used as the number display element 23.

Fig. 7 shows another embodiment of a time display portion, in which the time display is indicated in the form of a bar graph. This type of bar graph time display is preferred for displaying the time remaining for the presentation. The unit time is displayed as a bar graph display made up of unit line segments that represent a quantized amount of time, wherein the line segments disappear one at a time in sequential order for each prescribed unit of time that elapses. By using this type of bar graph time display, a speaker is able to judge simultaneously how much time has elapsed and how much time remains. Also for such bar graph, by the invention, it is possible to keep the orientation independent from the orientation of the apparatus.

For the above described bar graph time display portion, it is possible to use an LED or a fluorescent character display tube, either of which can be arranged at the position of the time display cover 21 shown in Fig. 3. In this case, the bar graph time display is displayed directly in the half mirror 4 as a virtual image. Thus, by limiting the display to a simple graph that does not use characters or numerals, even if the virtual image displayed in the half mirror 4 is a mirror image of the original image, the speaker will still be able to easily read the bar graph time display with no feeling of disorientation or confusion. Moreover, this embodiment makes it possible to easily read the time display even when the manuscript display apparatus is positioned lengthwise for use, as shown in Fig. 1, or sideways for use, as shown in Fig. 2. Furthermore, because an LED or a fluorescent display tube can be used to directly display the time display as a virtual image in the half mirror 4, there is no need for a time display image reversing means such as the mirror 22 shown in Fig. 4 and Fig. 5.

The diffusion plate 13 is a milky white colored translucent resinous plate that has undergone a hard coat treatment, and ensures that the light emitted from the light emitting bodies will be sufficiently diffused so as to uniformly illuminate the entire manuscript sheet, and this makes it possible for the entire manuscript sheet to be displayed in the half mirror as a virtual image having a uniform brightness.

In order to make it easy to remove a manuscript sheet from the diffusion plate 13, an indentation or a notch 13a is formed in a peripheral portion thereof. In the particular case where the diffusion plate 13 is made of resin, such an indentation can be very useful, because static electricity sometimes causes the manuscript sheet to stick onto the diffusion plate which makes it somewhat difficult to remove the manuscript sheet.

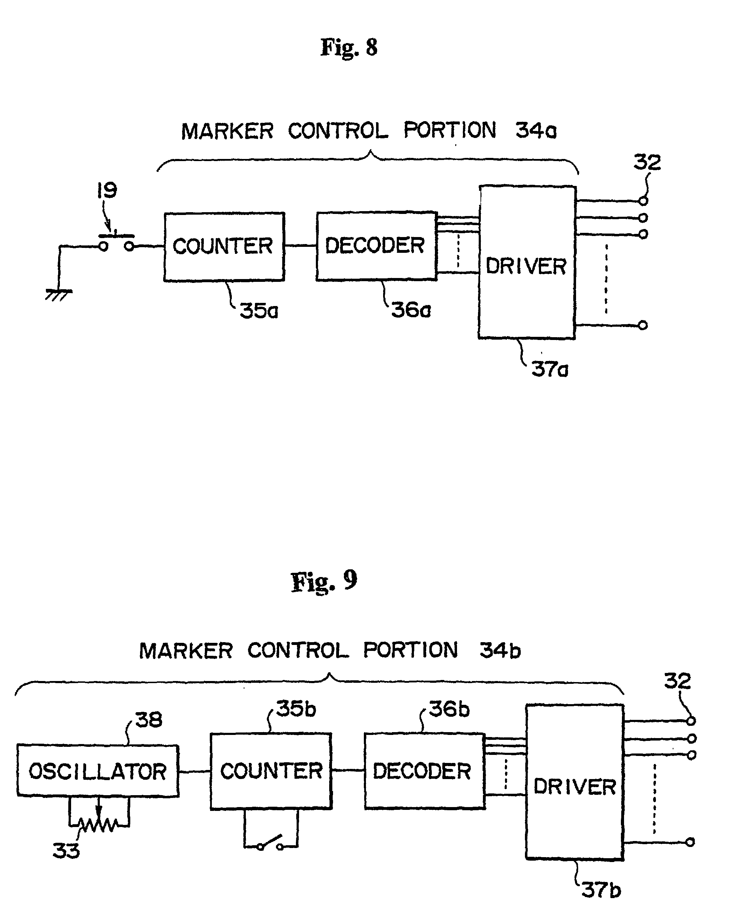

The marker portion 30 is constructed from the plurality of LED 32 arranged in series as shown in Fig. 3 and a marker control portion 34a for controlling them. Fig. 8 is a block diagram of the marker control portion 34a. As shown by the block diagram, when a speaker operates the switch 19, an operation signal is sent sequentially through a counter 35a, a decoder 36a and a driver 37a to sequentially light up prescribed lights of the LED 32. In this way, by roughly coinciding the position of the prescribed lit-up light of the LED 32 with the beginning of the next line of the manuscript to be read, the position of the virtual image of the prescribed lit-up light of the LED 32 allows the speaker to easily find the beginning of the next line of the manuscript to be read, and thereby makes it possible for the speaker to deliver a smooth presentation.

Other embodiments are possible for the marker portion 30, such as an automatic marker display means in place of the marker displaying method as described above. In this connection, Fig. 9 shows a block diagram of an example for an automatic marker control portion 34b. According to this arrangement, by adjusting the resistance value of a variable resistor 33 in advance by operating the control knob (not shown in the drawing) of the variable resistor 33 to set the frequency of an oscillator 38 appropriately, it is possible to lighten up a prescribed LED 32 sequentially in a predetermined time interval. As a result, by merely reading a line of the manuscript indicated by the lit-up light of the LED 32 sequentially, a speaker can easily finish a presentation within a prescribed presentation time.

Furthermore, even though Fig. 3 shows the marker portion 30 being provided to run parallel to a lengthwise side of the diffusion plate 13, it is also possible to provide the marker portion 30 so as to run parallel to a widthwise side of the diffusion plate 13. In this way, by employing two groups of marker portions, it becomes possible to use an appropriate marker portion for any situation, regardless of whether the manuscript display apparatus is placed widthwise for use or whether the manuscripts are written horizontally or vertically. Furthermore, it is not necessary to provide a marker display window 31, and instead it is possible to provide a plurality of LED 32 of the marker display portion 30 directly under a side portion of the diffusion plate 13. In this case, the light of the lit-up LED 32 passes through the diffusion plate 13 and the manuscript sheet and appears as a virtual image in the half mirror 60.

## Claims

1. A manuscript display apparatus (1), comprising:
- a main body (2) including a top cover (11) which contains a manuscript sheet supporting means (3, 13) adapted for supporting thereon a manuscript sheet (7) in which a manuscript to be displayed is written;
- light generating means (14) adapted for generating light passing through the manuscript sheet which is supported on said manuscript sheet supporting means;
- a half mirror (4, 60) arranged for reflecting the light which is generated by said light generating means (14) and then passed through the manuscript sheet, the half mirror having a comer portion;
- support means (5) supporting said half mirror (4), said support means having an upper end portion (41) whereon the half mirror is pivotally supported,
**characterized in that**
- the comer portion of the half mirror (4, 60) is pivotally supported by the support means (5) through a ball joint (6) provided on said upper end portion;
- the main body (2) contains a rotatable time display means (20) adapted to display a time display image as a virtual image in said half mirror (4, 60) and housed inside a circular shaped rotatable unit (24) which is rotatable within a circular-shaped mounting opening (25) in the main body cover (11) about a vertical axis in order to selectively display said virtual time display image in said half mirror in either widthwise or lenghtwise direction of said half mirror;
- said time display means (20) includes a clock and a display element (23) displaying the time.

2. The manuscript display apparatus as claimed in claim 1, **characterized in that** said time display means (20) includes a mirror (22) for reversing the time display image displayed in said time display means.

3. The manuscript display apparatus as claimed in claim 1 or 2, **characterized in that** said time display means (20) further includes a number display element (23).

4. The manuscript display apparatus as claimed in any of claims 1 to 3, **characterized in that** said time display means (20) includes a bar graph display element.

5. The manuscript display apparatus as claimed in any of claims 1 to 4, **characterized in that** it further comprises a marker display means (30) for displaying a marker image which indicates a desired position on the manuscript, the marker image being displayed in said half mirror (4) as a virtual image.

6. The manuscript display apparatus as claimed in claim 5, **characterized in that** said marker display means (30) includes a plurality of marker lights (32) arranged at regular intervals, a switch (19) for lighting up the marker lights, and a marker control means (34a) for controlling the lighting up of the marker lights, in which the operation of the switch causes the marker lights to be lit up sequentially.

7. The manuscript display apparatus as claimed in claim 5, **characterized in that** the marker display means (30) includes a plurality of marker lights (32) arranged at regular intervals and a control means (34b) which sequentially lights up each marker light after a prescribed time interval has elapsed.

8. The manuscript display apparatus as claimed in any of claims 1 to 7, **characterized in that** said manuscript sheet supporting means includes a light permeable plate (3,13) which permits the light generated by said light generating means (14) to pass therethrough.

9. The manuscript display apparatus as claimed in claim 8, **characterized in that** said light permeable plate comprises a diffusion plate (3, 13) which diffuses light passing therethrough.

10. The manuscript display apparatus as claimed in any of claims 1 to 9, **characterized in that** a notch or an indentation (13a) for allowing easy removal of the manuscript sheet (7) placed on said manuscript sheet supporting means (13) is formed in said manuscript sheet supporting means.

11. The manuscript display apparatus as claimed in any of claims 1 to 10, **characterized in that** said light generating means includes a light source constituted of a plurality of light emitting bodies (14) and arranged underneath said manuscript sheet supporting means (3, 13), and further includes reflection means (15) for reflecting and diffusing the light emitted from said light generating means.

12. The manuscript display apparatus as claimed in any of claims 1 to 11, **characterized in that** the support means (5) for supporting said half mirror (4) includes a support portion having at least two support members (41, 43) and at least one joint (42) which allows said support portion to be expandable and contractible.

13. The manuscript display apparatus as claimed in claim 12, **characterized in that** said support portion (41, 43) has an upper end portion (6, 48, 49), to which said half mirror (4) is attached so as to be rotatable around an axis that is orthogonal to the axis of said support portion.

14. The manuscript display apparatus as claimed in claim 12 or 13, **characterized in that** the main body (2) includes said light generating means (14) and has a side surface, and that said support means (5) includes a lower end (45) which is attached to said main body portion pivotally about the axis of a bolt (46), which is parallel with the side surface of said main body.

## Patentansprüche

1. Manuskript-Darstellvorrichtung (1) mit:
- einem Hauptkörper (2) einschließlich einer oberen Abdeckung (11), die eine Manuskriptblatt-Trägereinrichtung (3, 13) umfaßt, die dazu ausgebildet ist, auf sich ein Manuskriptblatt (7) zu tragen, auf dem ein darauf darzustellendes Manuskript geschrieben ist;
- lichterzeugenden Einrichtungen (14), die dazu ausgebildet sind, Licht zu erzeugen, das durch das Manuskriptblatt hindurchtritt, welches auf der Manuskriptblatt-Trägereinrichtung gehalten wird;
- einem Halbspiegel (4, 60), der angeordnet ist zum Reflektieren des Lichts, das durch die lichterzeugende Einrichtung (14) erzeugt und dann durch das Manuskriptblatt hindurchgeleitet ist, wobei der Halbspiegel einen Eckteil aufweist;
- eine Trageinrichtung (5), die den Halbspiegel (4) trägt und einen oberen Endteil (41), auf dem der Halbspiegel verdrehbar gelagert ist, aufweist;
**dadurch gekennzeichnet, daß**
- der Eckteil des Halbspiegels (4, 60) über ein Kugelgelenk (6), das am oberen Endteil der Trageinrichtung (5) sitzt, durch diese Trageinrichtung (5) verdrehbar gehaltert ist;
- der Hauptkörper (2) eine verdrehbare Zeitdarstelleinrichtung (20) enthält, die dazu ausgebildet ist, ein Zeitanzeigebild als virtuelles Bild im Halbspiegel (4, 60) zu zeigen, und das in einer kreisförmig gestalten rotierbaren Einheit (24) untergebracht ist, die innerhalb einer kreisförmigen Montageöffnung (25) in der Abdeckung (11) des Hauptkörpers um eine vertikale Achse drehbar ist, um selektiv das virtuelle Zeitanzeigebild im Halbspiegel in der Querformat- oder in der Hochformatrichtung des Halbspiegels wiederzugeben;
- wobei die Zeitanzeigeeinrichtung (20) eine Uhr und ein die Zeit anzeigendes Anzeigeelement (23) enthält.

2. Manuskript-Darstellvorrichtung nach Anspruch 1, **dadurch gekennzeichnet, daß** die Zeitanzeigeeinrichtung (20) einen Spiegel (22) zum Umkehren des in der Zeitanzeigeeinrichtung dargestellten Zeitanzeigebilds enthält.

3. Manuskript-Darstellvorrichtung nach Anspruch 1 oder 2, **dadurch gekennzeichnet, daß** die Zeitanzeigeeinrichtung (20) weiterhin ein Nummernzahlenanzeigeelement (23) enthält.

4. Manuskript-Darstellvorrichtung nach einem der Ansprüche 1 bis 3, **dadurch gekennzeichnet, daß** die Zeitanzeigeeinrichtung (20) ein Balkengrafik-Darstellelement enthält.

5. Manuskript-Darstellvorrichtung nach einem der Ansprüche 1 bis 4, **dadurch gekennzeichnet, daß** sie weiterhin eine Markierungsanzeigeeinrichtung (30) zum Anzeigen eines Markierungsbilds, das eine gewünschte Position am Manuskript anzeigt, umfaßt, wobei das Markierungsbild im Halbspiegel (4) als virtuelles Bild dargestellt ist.

6. Manuskript-Darstellvorrichtung nach Anspruch 5, **dadurch gekennzeichnet, daß** die Markierungsanzeigeeinrichtung (30) eine Mehrzahl von Markierungslichtern (32) umfaßt, die in regelmäßigen Intervallen angeordnet sind, weiterhin einen Schalter (19) zum Aufleuchtenlassen der Markierungslichter und eine Markierungssteuereinrichtung (34a) zum Steuern des Aufleuchtens der Markierungslichter, wobei die Betätigung des Schalters bewirkt, daß die Markierungslichter aufeinanderfolgend zum Aufleuchten gebracht werden.

7. Manuskript-Darstellvorrichtung nach Anspruch 5, **dadurch gekennzeichnet, daß** die Markierungsanzeigeeinrichtung (30) eine Mehrzahl von Markierungslichtern (32) umfaßt, die in regelmäßigen Intervallen angeordnet sind, sowie eine Steuereinrichtung (34b), die die einzelnen Markierungslichter sequentiell nach Ablauf eines gegebenen Zeitintervalls zum Aufleuchten bringt.

8. Manuskript-Darstellvorrichtung nach einem der Ansprüche 1 bis 7, **dadurch gekennzeichnet, daß** die Manuskriptblatt-Trägereinrichtung eine lichtdurchlässige Platte (3, 13) enthält, durch die das von der lichterzeugenden Einrichtung (14) erzeugte Licht hindurchtreten kann.

9. Manuskript-Darstellvorrichtung nach Anspruch 8, **dadurch gekennzeichnet, daß** die lichtdurchlässige Platte eine Diffusionsplatte (3, 13) umfaßt, die das hindurchtretende Licht verteilt.

10. Manuskript-Darstellvorrichtung nach einem der Ansprüche 1 bis 9, **dadurch gekennzeichnet, daß** in der Manuskriptblatt-Trägereinrichtung eine Nut oder Einkerbung (13a) gebildet ist zum Ermöglichen eines leichten Entfernens des Manuskriptblatts (7), das auf der Manuskriptblatt-Trägereinrichtung (13) angeordnet ist.

11. Manuskript-Darstellvorrichtung nach einem der Ansprüche 1 bis 10, **dadurch gekennzeichnet, daß** die lichterzeugende Einrichtung eine Lichtquelle, die aus einer Mehrzahl von lichtemittierenden Körpern (14) zusammengesetzt ist und unter der Manuskriptblatt-Tlrägereinrichtung (3,13) angeordnet ist, und weiterhin eine Reflexionseinrichtung (15) zum Reflektieren und Diffundieren des von der lichterzeugenden Einrichtung emittierten Lichts enthält.

12. Manuskript-Darstellvorrichtung nach einem der Ansprüche 1 bis 11, **dadurch gekennzeichnet, daß** die Trageinrichtung (5) zum Tragen des Halbspiegel (4) einen Tragbauteil enthält, der wenigstens zwei Trageglieder (41, 43) und wenigstens ein Verbindungsstück (42), das erlaubt, daß der Tragbauteil expandierbar und kontraktierbar ist, enthält.

13. Manuskript-Darstellvorrichtung nach Anspruch 12, **dadurch gekennzeichnet, daß** der Tragbauteil (41, 43) einen oberen Endteil (6, 48, 49) aufweist, an dem der Halbspiegel (4) so befestigt ist, daß er um eine Achse verdrehbar ist, die orthogonal zur Achse des Tragbauteils ist.

14. Manuskript-Darstellvorrichtung nach Anspruch 12 oder 13, **dadurch gekennzeichnet, daß** der Hauptkörper (2) die lichterzeugende Einrichtung (14) enthält und eine Seitenfläche aufweist und daß die Trageinrichtung (5) einen unteren Endteil (45) enthält, der am Hauptkörper um die Achse eines Bolzens (46) verdrehbar befestigt ist, der parallel zur Seitenfläche des Hauptkörpers liegt.

## Revendications

1. Dispositif d'affichage d'un manuscrit (1), comprenant :
- un corps principal (2) comprenant un couvercle supérieur (11) qui contient un moyen de support de feuille de manuscrit (3, 13) destiné à supporter sur celui-ci une feuille de manuscrit (7) dans laquelle est écrit un manuscrit à afficher ;
- des moyens de génération de lumière (14) destinés à générer de la lumière passant à travers la feuille de manuscrit supportée par le moyen de support de feuille de manuscrit ;
- un demi-miroir (4, 60) disposé pour réfléchir la lumière qui est générée par les moyens de génération de lumière (14) et qu'on fait ensuite passer à travers la feuille de manuscrit, le demi-miroir comportant une partie de coin ;
- un moyen de support (5) supportant le demi-miroir (4), ce moyen de support comportant une partie d'extrémité supérieure (41) sur laquelle le demi-miroir est monté en pivotement,
**caractérisé en ce que**
- la partie de coin du demi-miroir (4, 60) est supportée en pivotement par le moyen de support (5) par l'intermédiaire d'un joint à bille (6) prévu sur la partie d'extrémité supérieure (41) ;
- le corps principal (2) contient un moyen d'affichage de temps rotatif (20) destiné à afficher une image d'affichage de temps sous la forme d'une image virtuelle dans le demi-miroir (4, 60), en étant logé à l'intérieur d'un bloc rotatif de forme circulaire (24) qui peut tourner autour d'un axe vertical dans une ouverture de monture de forme circulaire (25) du couvercle (11) de corps principal, de manière à afficher sélectivement l'image d'affichage de temps virtuel dans le demi-miroir, soit dans le sens de la largeur soit dans le sens de la longueur de ce demi-miroir ; et
- le moyen d'affichage de temps (20) comprend une horloge et un élément d'affichage (23) affichant le temps.

2. Dispositif d'affichage de manuscrit selon la revendication 1, **caractérisé en ce que** le moyen d'affichage de temps (20) comprend un miroir (22) destiné à inverser l'image d'affichage de temps affichée dans le moyen d'affichage de temps.

3. Dispositif d'affichage d'un manuscrit selon la revendication 1 ou 2, **caractérisé en ce que** le moyen d'affichage de temps (20) comprend en outre un élément d'affichage des nombres (23).

4. Dispositif d'affichage de manuscrit selon l'une quelconque des revendications 1 à 3, **caractérisé en ce que** le moyen d'affichage de temps (20) comprend un élément d'affichage graphique à barres.

5. Dispositif d'affichage d'un manuscrit selon l'une quelconque des revendications 1 à 4, **caractérisé en ce qu'**il comprend en outre un moyen d'affichage de marqueur (30) destiné à afficher une image de marqueur qui indique une position voulue sur le manuscrit, l'image de marqueur étant affichée dans le demi-miroir (4) sous la forme d'une image virtuelle.

6. Dispositif d'affichage d'un manuscrit selon la revendication 5, **caractérisé en ce que** le moyen d'affichage de marqueur (30) comprend un certain nombre de lampes de marqueur (32) disposées à intervalles réguliers, un commutateur (19) pour allumer les lampes de marqueur, et un moyen de commande de marqueur (34a) pour commander l'allumage des lampes de marqueur, le fonctionnement du commutateur produisant l'allumage séquentiel des lampes de marqueur.

7. Dispositif d'affichage d'un manuscrit selon la revendication 5, **caractérisé en ce que** le moyen d'affichage de marqueur (30) comprend un certain nombre de lampes de marqueur (32) disposées à intervalles réguliers, et un moyen de commande (34b) qui allume séquentiellement chaque lampe de marqueur après l'écoulement d'un intervalle de temps prédéterminé.

8. Dispositif d'affichage d'un manuscrit selon l'une quelconque des revendications 1 à 7, **caractérisé en ce que** le moyen de support de feuille de manuscrit comprend une plaque perméable à la lumière (3, 13) qui permet à la lumière générée par les moyens de génération de lumière (14), de passer à travers celle-ci.

9. Dispositif d'affichage d'un manuscrit selon la revendication 8, **caractérisé en ce que** la plaque perméable à la lumière comprend une plaque de diffusion (3, 13) qui diffuse la lumière passant à travers celle-ci.

10. Dispositif d'affichage d'un manuscrit selon l'une quelconque des revendications 1 à 9, **caractérisé en ce qu'**une encoche ou découpe (13a) destinée à permettre l'enlèvement facile de la feuille de manuscrit (7) placée sur le moyen de support de feuille de manuscrit (13), est formée dans le moyen de support de feuille de manuscrit.

11. Dispositif d'affichage d'un manuscrit selon l'une quelconque des revendications 1 à 10, **caractérisé en ce que** les moyens de génération de lumière comprennent une source de lumière constituée d'un certain nombre de corps d'émission de lumière (14) et étant disposée au-dessous du moyen de support de feuille de manuscrit (3, 13), ces moyens comprenant en outre un moyen de réflexion (15) pour réfléchir et diffuser la lumière émise par les moyens de génération de lumière.

12. Dispositif d'affichage d'un manuscrit selon l'une quelconque des revendications 1 à 11, **caractérisé en ce que** le moyen de support (5) destiné à supporter le demi-miroir (4) comprend une partie de support munie d'au moins deux éléments de support (41, 43), et au moins un joint (42) qui permet à la partie de support de s'allonger et de se contracter.

13. Dispositif d'affichage d'un manuscrit selon la revendication 12, **caractérisé en ce que** la partie de support (41, 43) comporte une partie d'extrémité supérieure (6,48,49) à laquelle le demi-miroir (4) est attaché de manière à pouvoir tourner autour d'un axe perpendiculaire à l'axe de la partie de support.

14. Dispositif d'affichage d'un manuscrit selon la revendication 12 ou 13, **caractérisé en ce que** le corps principal (2) comprend les moyens de génération de lumière (14) ainsi qu'une surface latérale ; et le moyen de support (5) comprend une partie d'extrémité inférieure (45) qui est montée sur le corps principal de manière à pouvoir pivoter autour de l'axe d'un boulon (46) parallèle à la surface latérale du corps principal.
